# DEMANDE DE BREVET EUROPEEN

(11) **EP 1 122 149 A1**
(43) Date de publication de la demande: **08.08.2001**
(21) Numéro de dépôt: 01420026.5
(22) Date de dépôt: 01.02.2001
(51) Int. Cl.: B62D 3/12

(54) **Dispositif de limitation des contraintes et bruits dans une direction à crémaillère**

(30) Priorité: 04.02.2000 FR 0001454
(71) Demandeur: Société de Mécanique d'Irigny, 69540 Irigny (FR)
(72) Inventeur: Reynard, Bruno, 69008 Lyon (FR)
(74) Mandataire: Bratel, Gérard

(57) **Abrégé**

Le dispositif assure la limitation des contraintes et bruits engendrées par les chocs, intervenant en fin de course de braquage, dans une direction à crémaillère de véhicule automobile, et il permet d'augmenter l'effort au volant lorsque l'on arrive vers la butée de braquage.

Ce dispositif (16) est constitué d'une bague (19) en matière élastiquement déformable, qui est montée autour de la crémaillère (2), sur une pièce (18) ou partie rigide lui servant de support, située sur un boîtier de rotule (9) à une extrémité (8) de la crémaillère (2) ou à une extrémité (17) du carter tubulaire fixe (1) qui entoure cette crémaillère. L'invention s'applique aux directions manuelles et aux directions assistées.

## Description

La présente invention concerne les systèmes de direction à crémaillère, pour véhicules automobiles. Plus particulièrement, cette invention se rapporte à un dispositif de limitation des contraintes et bruits engendrés par les chocs, intervenant en fin de course de braquage, dans une direction à crémaillère, le dispositif permettant en outre d'augmenter l'effort au volant lorsqu'on arrive vers la butée de braquage.

En fin de course de braquage à droite ou à gauche, il se produit inévitablement un choc générateur de contraintes et de bruits, lorsque le boîtier de rotule porté par une extrémité de la crémaillère vient en butée contre une extrémité de carter tubulaire fixe qui entoure habituellement la crémaillère.

Pour limiter ces contraintes et bruits, il convient de limiter l'intensité du choc qui en est la cause, en amortissant ce choc, tout en réalisant une butée franche qui définit la position de fin de course de la crémaillère. A cet effet, on connaît déjà des dispositifs constitués d'une pièce métallique, complétée par une bague en matière plastique - voir par exemple le document JP 08133102 A. Cette solution reste bruyante, et elle entraîne une complication de fabrication et de montage, puisqu'elle nécessite deux pièces bien distinctes. Un autre dispositif connu (EP 0812755 A2) utilise un ressort métallique hélicoïdal, ce qui constitue une solution très coûteuse, encombrante et très différente de la présente invention.

La présente invention vise à éviter ces inconvénients, en fournissant un dispositif efficace, simple, compact et économique pour limiter les chocs et leurs conséquences, lors de l'arrivée en fin de course de la crémaillère, tout en permettant d'augmenter l'effort au volant lorsqu'on arrive près de la fin de course.

A cet effet, l'invention a pour objet un dispositif de limitation des contraintes et bruits dans une direction à crémaillère, dispositif qui est constitué essentiellement d'une bague en matière élastiquement déformable, laquelle est montée autour de la crémaillère, sur une pièce ou partie rigide lui servant de support, située sur un boîtier de rotule à une extrémité de la crémaillère ou à une extrémité du carter tubulaire fixe qui entoure cette crémaillère.

La bague en matière élastiquement déformable, notamment réalisée en élastomère, est écrasée en fin de course de la crémaillère, ce qui réalise l'amortissement de choc souhaité ; en fin d'écrasement de cette bague, une butée franche, définissant la position de fin de course de la crémaillère, se produit sur la pièce ou partie rigide, réalisée par exemple en polyamide, qui sert de support à ladite bague en matière élastiquement déformable.

De plus, l'invention procure une augmentation de l'effort au volant, lorsque l'on s'approche de la butée de braquage, donc un contact moins énergique avec la butée elle-même.

Selon un mode de réalisation de l'invention, la bague en matière élastiquement déformable est montée dans une forme annulaire, creusée dans la pièce ou partie rigide lui servant de support, ladite bague en matière élastiquement déformable dépassant hors de la forme annulaire lorsqu'elle se trouve à l'état libre, et cette bague étant susceptible d'être écrasée jusqu'à se trouver entièrement à l'intérieur de ladite forme annulaire.

La bague élastique, logée dans une forme telle que rainure annulaire, se trouve ainsi disposée entre une zone intérieure et une zone périphérique de la pièce ou partie rigide, zones servant de surface de butée en fin d'écrasement de ladite bague. Alors que la zone intérieure de la pièce ou partie rigide est relativement massive, sa zone périphérique peut être plus mince, et comporter en conséquence un risque de déformation et de détérioration, par exemple lorsqu'en raison d'un décentrage, l'élément venant en butée ne vient heurter qu'une portion de l'étendue totale de cette zone extérieure.

Pour prévenir ce risque de détérioration, il est prévu un autre mode de réalisation de l'invention, dans lequel la bague en matière élastiquement déformable est montée sur une pièce ou partie rigide pourvue d'une zone centrale saillante entourée concentriquement par ladite bague, mais dépourvue de zone périphérique correspondante, ou du moins pourvue d'une zone périphérique d'épaisseur réduite par rapport à la zone centrale. On évite ainsi une déformation de la zone périphérique et une dégradation de celle-ci, le choc étant finalement absorbé par la seule zone centrale massive de la pièce ou partie rigide.

Avantageusement, la bague en matière élastiquement déformable est une bague surmoulée sur la pièce ou partie rigide, lui servant de support. Dans un tel mode de réalisation, la bague en matière élastiquement déformable est réalisée par exemple avec plusieurs tenons d'ancrage, formés à intervalles angulaires sur sa face postérieure , et noyés dans des trous formés sur la pièce ou partie rigide. La bague en matière élastiquement déformable possédant une section courante sensiblement rectangulaire ou triangulaire ou équivalente, cette section comporte de préférence des flancs intérieur et extérieur inclinés en sens opposés, qui facilitent le démoulage lors de l'opération de surmoulage de ladite bague.

Une fois cette opération de surmoulage réalisée, la bague élastique et sa pièce de support constituent un élément unique, facile à manipuler et à monter.

Selon une forme de réalisation de l'invention, la bague élastiquement déformable est montée sur une pièce rigide de support qui est une pièce distincte, elle-même fixée sur le boîtier de rotule, en regard de l'extrémité correspondante du carter, ou sur l'extrémité du carter, en regard du boîtier de rotule.

Une autre forme de réalisation particulièrement avantageuse est envisageable dans le cas d'application de l'invention à une direction à crémaillère avec carter en matière plastique. Dans ce cas, et dans la mesure où le choix est fait de placer le dispositif limiteur de choc du côté du carter, la bague en matière élastiquement déformable peut être montée sur une partie rigide de support qui est constituée directement par l'extrémité correspondante du carter en matière plastique. Les dispositifs prévus du côté droit et du côté gauche sont ainsi réalisables par surmoulage simultané de leurs bagues élastiques respectives, directement aux deux extrémités du carter, ces extrémités étant elles-mêmes conformées comme défini ci-dessus pour les pièces ou parties rigides.

L'invention sera mieux comprise à l'aide de la description qui suit, en référence au dessin schématique annexé représentant, à titre d'exemples, quelques formes d'exécution de ce dispositif de limitation des contraintes et bruits dans une direction à crémaillère :
Figure 1 est une vue d'ensemble, de face, d'une direction à crémaillère de véhicule automobile, appliquant le dispositif objet de l'invention ;
Figure 2 représente, à plus grande échelle, la partie gauche de la direction de figure 1 ;
Figure 3 est une vue détaillée, en coupe, d'un dispositif conforme à la présente invention, cette figure pouvant être considérée comme le détail « A » de la figure 2 ;
Figure 4 est une vue en coupe similaire à figure 3, mais illustrant une autre position du dispositif ;
Figure 5 représente, dans une vue en coupe similaire aux précédentes, une variante de ce dispositif.

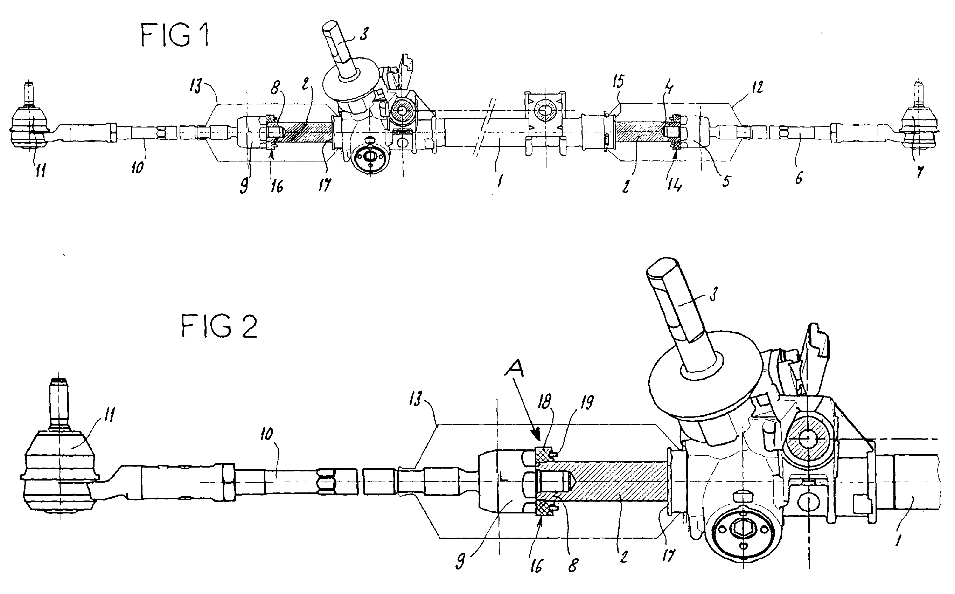

Les figures 1 et 2 représentent une direction de véhicule automobile, qui comprend un carter central fixe tubulaire 1 dans lequel est montée coulissante, axialement, une crémaillère 2 dont les deux extrémités se situent à l'extérieur du carter 1. La crémaillère 2 possède une denture, venant en prise avec un pignon dont l'arbre 3 est accouplé à la colonne de direction (non représentée). L'extrémité droite 4 de la crémaillère 2 porte un boîtier de rotule 5, servant à l'articulation d'une extrémité d'une biellette 6 dont l'autre extrémité est solidaire du boîtier côté roue 7 droit.

De manière symétrique, l'extrémité gauche 8 de la crémaillère porte un boîtier de rotule 9, servant à l'articulation d'une extrémité d'une biellette 10 dont l'autre extrémité est solidaire du boîtier côté roue 11 gauche. Deux soufflets 12 et 13, respectivement droit et gauche, relient chacun une extrémité du carter 1 à la biellette 6 ou 10 correspondante.

Un premier dispositif limiteur de contraintes et bruits, désigné dans son ensemble par le repère 14, est monté sur le boîtier de rotule 5 droit, donc à l'extrémité droite 4 de la crémaillère 2, en regard de l'extrémité droite 15 du carter 1 . Le dispositif 14 intervient lorsque la crémaillère 2, se déplaçant de la droite vers la gauche, atteint sa position de fin de course à gauche. Un autre dispositif limiteur de contraintes et de bruits, désigné dans son ensemble par le repère 16, est monté sur le boîtier de rotule 9 gauche, donc à l'extrémité gauche 8 de la crémaillère 2, en regard de l'extrémité gauche 17 du carter 1 ; ce dispositif 16 intervient lorsque la crémaillère 2, se déplaçant de la gauche vers la droite, atteint sa position de fin de course à droite.

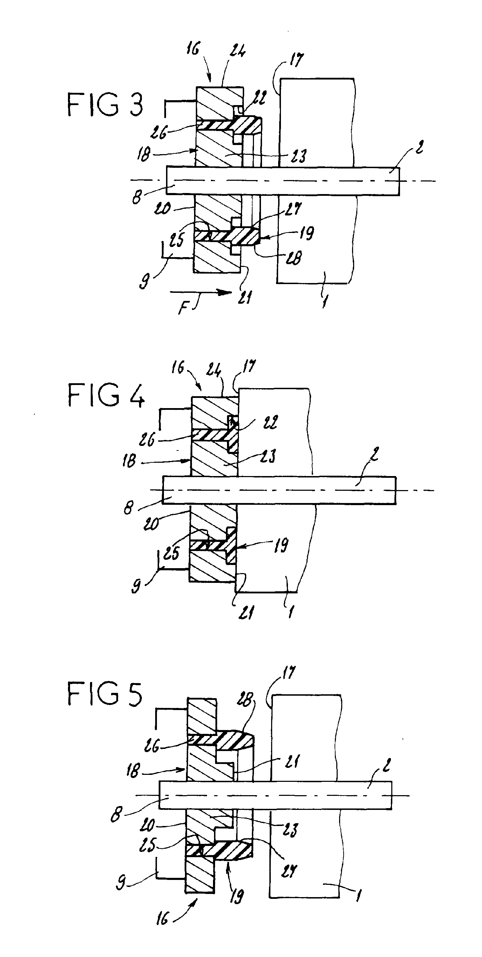

On décrira maintenant plus en détail la structure et le fonctionnement de l'un des dispositifs 14 et 16, dans une première forme d'exécution, en se référant aux figures 3 et 4.

Le dispositif 14 ou 16 se compose d'une pièce de support 18 et d'une bague 19. La pièce de support 18, de forme générale annulaire, est une pièce rigide, par exemple en polyamide. Cette pièce de support 18 est traversée en son centre par l'extrémité 4 ou 8 de la crémaillère 2, et elle est appliquée et fixée, par sa face postérieure 20, contre le boîtier de rotule 5 ou 9 correspondant.

La face antérieure 21 de la pièce de support 18 est creusée d'une rainure annulaire 22, qui sépare une zone intérieure ou centrale 23, d'une zone périphérique 24 de ladite pièce. Plusieurs trous 25 sont aménagés dans la pièce de support 18, à intervalles angulaires réguliers ou non, les trous 25 étant parallèles à l'axe de cette pièce et débouchant au fond de la rainure annulaire 22.

La bague 19 est une pièce surmoulée, en élastomère, qui prend place dans la rainure annulaire 22 de la pièce de support 18. Cette bague 19 est formée avec quatre tenons d'ancrage 26, sur sa face postérieure, ces tenons d'ancrage 26 étant séparés par des intervalles angulaires réguliers ou non et se trouvant noyés, respectivement, dans les quatre trous 25 de la pièce de support 18.

La bague 19 possède une section courante sensiblement rectangulaire et, à l'état libre, cette bague 19 dépasse hors de la rainure annulaire 22, en avant de la face antérieure 21 de la pièce 18, la hauteur de la section de la bague 19 étant supérieure à la profondeur de la rainure 22. Dans sa partie située à l'extérieur de la rainure 22, la bague 19 posède des flancs intérieur et extérieur respectivement 27 et 28, inclinés en sens opposés et convergents, pour faciliter le démoulage de cette bague 19 (voir plus particulièrement la figure 3).

Lorsque la crémaillère 2 parvient en fin de course, par exemple lors d'un déplacement de la gauche vers la droite (flèche F), le dispositif 16 qui est entraîné en translation avec la crémaillère 2 s'approche de l'extrémité gauche 17 du carter 1. Dans un premier temps, cette extrémité 17 du carter 1 rencontre la bague 19 en élastomère, qui s'écrase alors en absorbant l'énergie cinétique de la crémaillère 2. Une fois qu'un certain degré d'écrasement de la bague 19 a été atteint, celle-ci prend place entièrement dans la rainure annulaire 22, et l'extrémité 17 du carter 1 vient en contact avec la face antérieure 21 de la pièce de support 18, tant dans la zone centrale 23 que dans la zone périphérique 24 (voir figure 4). L'énergie cinétique résiduelle est alors absorbée directement par la pièce 18 qui joue le rôle de butée franche.

Bien entendu, lorsque la crémaillère 2 parvient dans son autre position de fin de course, c'est l'autre dispositif 14 qui intervient d'une manière similaire à la description précédente.

La figure 5 représente une variante du dispositif 16, dans laquelle la pièce de support 18 possède une configuration quelque peu différente, du côté de sa face antérieure 21. On distingue encore ici une zone centrale 23 de la pièce 18, qui est entourée concentriquement par la bague 19, pouvant être de forme identique à celle décrite précédemment. Par contre, la zone périphérique 24 de la précédente forme d'exécution est supprimée ; autrement dit, la rainure annulaire 22 est ouverte, latéralement, sur la périphérie de la pièce 18.

Il en résulte que, lors de l'arrivée de la crémaillère 2 vers sa fin de course (à droite ou à gauche), l'extrémité 15 ou 17 du carter 1 vient d'abord écraser comme précédemment la bague 19 en élastomère, puis vient en contact, après écrasement de la bague 19, avec la seule zone centrale 23 de la pièce 18, sans risque de dégradation de celle-ci par déformation de sa zone périphérique.

Dans une variante non représentée, équivalente aux formes d'exécution précédentes, le dispositif n'est pas fixé à l'extrémité 4 ou 8 de la crémaillère 2, mais il se situe à une extrémité 15 ou 17 du carter 1, en regard du boîtier de rotule 5 ou 9 correspondant. A cet effet, il suffit de retourner le dispositif et de le fixer, par la pièce de support 18, sur l'extrémité 15 ou 17 du carter 1.

Toutefois, dans la mesure où le dispositif 14 ou 16 est placé à une extrémité du carter 1, et si ce carter 1 est lui-même réalisé en matière plastique, l'extrémité dudit carter peut, dans une autre variante, constituer elle-même la partie servant de support à la bague 19 en élastomère. Ainsi, deux bagues 19 sont surmoulées respectivement aux deux extrémités 15 et 17 du carter 1, ces extrémités étant elles-mêmes conformées de manière similaire à la pièce de support 18 montrée aux figures 3 à 5.

L'on ne s'éloignerait pas du cadre de l'invention, telle que définie dans les revendications annexées :
- en réalisant la bague élastique, et la pièce ou partie lui servant de support, en toutes matières appropriées ;
- en donnant à cette bague élastique une section autre que rectangulaire, notamment une section triangulaire ou équivalente ;
- en réalisant la fixation de la bague élastique, sur ladite pièce ou partie, par tout moyen approprié autre que surmoulage, par exemple par collage ou par encliquetage ;
- en remplaçant la rainure annulaire de montage de la bague par toute forme équivalente ;
- en destinant le dispositif à des directions à crémaillère de tous types, que celles-ci soient notamment des directions manuelles ou des directions assistées.

## Revendications

1. Dispositif de limitation des contraintes et bruits engendrés par les chocs, intervenant en fin de course de braquage, dans une direction à crémaillère de véhicule automobile, caractérisé en ce qu'il est constitué essentiellement d'une bague (19) en matière élastiquement déformable, laquelle est montée autour de la crémaillère (2), sur une pièce (18) ou partie rigide lui servant de support, située sur un boîtier de rotule (5 ; 9) à une extrémité (4 ; 8) de la crémaillère (2) ou à une extrémité (15 ; 17) du carter tubulaire fixe (1) qui entoure cette crémaillère (2).

2. Dispositif selon la revendication 1, caractérisé en ce que la bague (19) en matière élastiquement déformable est une bague en élastomère.

3. Dispositif selon la revendication 1 ou 2, caractérisé en ce que la pièce (18) ou partie rigide, qui sert de support à la bague (19) en matière élastiquement déformable, est une pièce ou partie en polyamide.

4. Dispositif selon l'une quelconque des revendications 1 à 3, caractérisé en ce que la bague (19) en matière élastiquement déformable est montée dans une forme annulaire (22), creusée dans la pièce (18) en partie rigide lui servant de support, ladite bague (19) en matière élastiquement déformable dépassant hors de la forme annulaire (22) lorsqu'elle se trouve à l'état libre, et cette bague (19) étant susceptible d'être écrasée jusqu'à se trouver entièrement à l'intérieur de ladite forme annulaire (22).

5. Dispositif selon l'une quelconque des revendications 1 à 3, caractérisé en ce que la bague (19) en matière élastiquement déformable est montée sur une pièce (18) ou partie rigide pourvue d'une zone centrale saillante (23) entourée concentriquement par ladite bague (19), mais dépourvue de zone périphérique correspondante, ou du moins pourvue d'une zone périphérique (24) d'épaisseur réduite par rapport à la zone centrale (23).

6. Dispositif selon l'une quelconque des revendications 1 à 5, caractérisé en ce que la bague (19) en matière élastiquement déformable est une bague surmoulée sur la pièce (18) en partie rigide, lui servant de support.

7. Dispositif selon la revendication 6, caractérisé en ce que la bague (19) en matière élastiquement déformable est réalisée avec plusieurs tenons d'ancrage (26), formés à intervalles angulaires sur sa face postérieure, et noyés dans des trous (25) formés sur la pièce (18) ou partie rigide.

8. Dispositif selon la revendication 6 ou 7, caractérisé en ce que la bague (19) en matière élastiquement déformable possède une section courante sensiblement rectangulaire ou triangulaire ou équivalente, cette section comportant de préférence des flancs intérieur et extérieur (27, 28) inclinés en sens opposés.

9. Dispositif selon l'une quelconque des revendications 1 à 8, caractérisé en ce que la bague (19) élastiquement déformable est montée sur une pièce rigide de support qui est une pièce distincte (18), elle-même fixée sur le boîtier de rotule (5 ; 9), en regard de l'extrémité correspondante (15 ; 17) du carter (1), ou sur l'extrémité (15 ; 17) du carter (1), en regard du boîtier de rotule (5 ; 9).

10. Dispositif selon l'une quelconque des revendications 1 à 8, caractérisé en ce que, dans le cas d'application à une direction à crémaillère avec carter (1) en matière plastique, le dispositif (14 ; 16) étant placé du côté du carter (1), la bague (19) en matière élastiquement déformable est montée sur une partie rigide de support qui est constituée directement par l'extrémité correspondante (15 ; 17) du carter (1) en matière plastique.
